# EUROPÄISCHE PATENTSCHRIFT

(11) **EP 3 386 837 B1**
(45) Veröffentlichungstag und Bekanntmachung des Hinweises auf die Patenterteilung: **03.03.2021**
(21) Anmeldenummer: 16804819.7
(22) Anmeldetag: 01.12.2016
(51) Int. Cl.: B62D 1/181, B62D 5/00

(54) **LENKSÄULE FÜR EINE STEER-BY-WIRE-LENKEINRICHTUNG**
STEERING COLUMN FOR A STEER-BY-WIRE STEERING DEVICE
COLONNE DE DIRECTION POUR SYSTÈME DE DIRECTION À COMMANDE ÉLECTRIQUE

(30) Priorität: 08.12.2015 DE 102015224602
(43) Veröffentlichungstag der Anmeldung: 17.10.2018
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); FORTE, Sebastian, 9493 Mauren (LI)
(74) Vertreter: thyssenkrupp Intellectual Property GmbH
(86) Internationale Anmeldenummer: PCT/EP2016/079458
(87) Internationale Veröffentlichungsnummer: WO 2017/097662

(56) Entgegenhaltungen:
- DE-A1-102014 101 995
- JP-A- H03 157 266
- US-A- 2 769 351

## Beschreibung

### Stand der Technik

Die Erfindung betrifft eine verstellbare Lenksäule für eine steer-by-wire-Lenkeinrichtung eines Kraftfahrzeugs, umfassend eine Stelleinheit, die eine in einer Manteleinheit um eine Längsachse drehbar gelagerte Lenkspindel umfasst, wobei die Manteleinheit ein erstes Mantelrohr aufweist, in dem zumindest ein zweites Mantelrohr bezüglich der Längsachse drehfest angeordnet und teleskopierend axial verschiebbar gelagert ist, wobei mit dem ersten und dem zweiten Mantelrohr ein Stellantrieb verbunden ist, von dem das zweite Mantelrohr relativ zum ersten Mantelrohr axial ein- und ausfahrbar ist, und der einen Spindeltrieb umfasst mit einer parallel zur Längsachse angeordneten, von einem elektrischen Stellmotor drehend antreibbaren Gewindespindel, die sich an dem einem Mantelrohr abstützt und die in eine Spindelmutter eingeschraubt ist, die drehfest an dem anderen Mantelrohr angebracht ist, wobei die Gewindespindel sich innerhalb des ersten Mantelrohrs erstreckt und die Spindelmutter an dem zweiten Mantelrohr angebracht ist.

Steer-by-wire-Lenksysteme für Kraftfahrzeuge weisen wie bekannte konventionelle Lenksysteme eine Lenksäule auf, in die Lenkbefehle wie gewohnt durch manuelle Drehung eines Lenkrads eingegeben werden. Das Lenkrad bewirkt die Drehung einer Lenkspindel, die jedoch nicht mechanisch über ein Lenkgetriebe mit den zu lenkenden Rädern verbunden ist, sondern über Drehwinkel- bzw. Drehmomentsensoren den eingebrachten Lenkbefehl erfasst und ein daraus bestimmtes elektrisches Steuersignal an einen Lenksteller abgibt, der mittels eines elektrischen Stellantriebs einen entsprechenden Lenkeinschlag der Räder einstellt.

Das Lenkrad ist auf dem bezüglich der Fahrtrichtung hinteren, dem Fahrer zugewandten Ende der Lenkspindel angebracht. Diese ist um ihre Längsachse drehbar in einer Manteleinheit aufgenommen, welche ihrerseits in einer mit der Fahrzeugkarosserie verbindbaren Trag-einheit gehalten wird.

Zur Anpassung an die Fahrerposition sind gattungsgemäß verstellbare Lenksäulen bekannt, welche eine Verstellung der Lenkradposition relativ zur Fahrzeugkarosserie ermöglichen. Eine Längsverstellbarkeit des Lenkrads in Richtung der Längsachse der Lenkspindel kann dadurch realisiert werden, dass die Stelleinheit in ihrer Länge veränderbar ausgestaltet ist, indem die Manteleinheit eine in Richtung der Längsachse, d.h. axial teleskopierbare Anordnung von Mantelrohren aufweist, bei der beispielsweise das erste Mantelrohr ein äußeres Mantelrohr, in dem ein zweites Mantelrohr als inneres Mantelrohr axial verschiebbar aufgenommen ist.

Die Längsverstellung der Lenksäule kann zur Erhöhung des Bedienkomforts mittels eines elektromotorisch angetriebenen Stellantriebs erfolgen, der einen Spindeltrieb umfasst. Dadurch, dass die Gewindespindel des Spindeltriebs parallel zur Längsachse ausgerichtet mit einem der Mantelrohre verbunden ist und die translatorisch relativ dazu bewegbare Spindelmutter drehfest mit dem anderen Mantelrohr verbunden ist, können die Mantelrohre je nach Drehrichtung des die Gewindespindel antreibenden Stellmotors in Längsrichtung ein- oder ausgefahren werden. Eine derartige Anordnung ist im Stand der Technik für eine konventionelle Lenksäule beispielsweise aus der DE 10 2014 101 995 A1 bekannt.

Bei steer-by-wire-Lenksystemen entfällt die Notwendigkeit, die Lenkwelle bis zum Lenkgetriebe weiterzuführen, daher wird ein möglichst einfacher und kompakter Aufbau der Lenksäule angestrebt, der wenig Bauraum beansprucht und - insbesondere im Hinblick auf autonomes Fahren, bei dem während der Fahrt kein manueller Lenkeingriff erforderlich ist - auf möglichst kleinem Raum verstaubar ist. Aus Sicherheitsaspekten sollen dabei möglichst keine beweglichen bzw. rotierenden Teile des Spindeltriebs vom Fahrzeuginnenraum aus zugänglich sein. Diesbezüglich ist es bei den vorbekannten Lenksäulen nachteilig, dass der Spindeltrieb mit außen frei liegender Gewindespindel an der Manteleinheit angebracht ist. Daraus resultiert bereits ein relativ voluminöser Aufbau, der durch Schutzvorrichtungen für die Gewindespindel noch weiter vergrößert wird und daher für steer-by-wire-Lenksysteme nur eingeschränkt geeignet ist.

Aus der JP H03 157266 A, die als nächstliegender Stand der Technik angesehen wird, ist eine Lenksäule der eingangs genannten Art bekannt. Diese ist jedoch für steer-by-wire-Lenksysteme ungeeignet.

Angesichts der vorangehend erläuterten Problematik ist es eine Aufgabe der vorliegenden Erfindung, eine motorisch verstellbare Lenksäule anzugeben, die für den Einsatz in steer-by-wire-Lenksystemen besser geeignet ist. Insbesondere wird ein einfacher, kompakter und sicherer Aufbau angestrebt.

### Darstellung der Erfindung

Gelöst wird die Aufgabe durch eine verstellbare Lenksäule gemäß dem Patentanspruch 1. Vorteilhafte Weiterbildungen ergeben sich aus den Unteransprüchen.

Es wird zur Lösung der vorgenannten Problematik erfindungsgemäß vorgeschlagen, dass in der Manteleinheit ein Aktuator angeordnet ist, der mit der Lenkspindel zusammenwirkt und von dem ein Drehmoment auf die Lenkspindel ausübbar ist

Für steer-by-wire-Anwendungen ist erfindungsgemäß vorgesehen, dass in der Manteleinheit ein Aktuator angeordnet ist, der mit der Lenkspindel zusammenwirkt und von dem ein Drehmoment auf die Lenkspindel ausübbar ist. Der Aktuator, häufig als Feedback-Aktuator bezeichnet, dient dazu, dem Fahrer über das Lenkrad eine haptische Rückmeldung (Feedback) zu geben, welches den Eindruck einer konventionellen Lenkung erzeugt, bei der in die gelenkten Räder von der Fahrbahn einwirkende Kräfte als Reaktionsmomente in die Lenkwelle eingebracht werden. Die Reaktionsmomente sind abhängig vom Lenkwinkel, der Fahrgeschwindigkeit sowie der Fahrbahnbeschaffenheit und ermöglichen ein angepasstes Lenkverhalten. Dadurch, dass der Aktuator, der zur Erzeugung aktiver Reaktionsmomente einen Stellantrieb aufweisen kann, oder passiv ein Bremsmoment in die Lenkspindel einkoppeln kann, wird das Lenkgefühl zugunsten einer erhöhten Fahrsicherheit verbessert. Bei der erfindungsgemäßen Lenksäule kann ein derartiger Aktuator bevorzugt in dem zweiten Mantelrohr oder dem dritten Mantelrohr integriert sein, wo er-wie bereits der erfindungsgemäße Spindeltrieb - geschützt untergebracht ist.

Bevorzugt erstreckt sich die Gewindespindel koaxial innerhalb des ersten Mantelrohrs und die Spindelmitter ist koaxial an dem zweiten Mantelrohr angebracht.

Bei der Erfindung wird in einer steer-by-wire-Lenksäule der Bauraum innerhalb der Manteleinheit, durch die bei einer konventionellen Lenksäule die Lenkspindel koaxial durch die ineinander teleskopierend verstellbaren Mantelrohre hindurchgeführt ist, zur Unterbringung des Spindelantriebs der Längsverstellung genutzt. Dabei kann sich die Gewindespindel vom bezüglich der Fahrtrichtung vorderen, dem zweiten Mantelrohr abgewandten Ende des ersten Mantelrohrs, bevorzugt koaxial, zum zweiten Mantelrohr, d.h. nach hinten erstrecken, wo sie in die Spindelmutter eingreift und, wenn das zweite Mantelrohr in das erste Mantelrohr eingefahren ist, hinter der Spindelmutter, bevorzugt koaxial, in das zweite Mantelrohr eintaucht. Dadurch, dass der im Stand der Technik außerhalb der Manteleinheit angeordnete Spindeltrieb erfindungsgemäß in das Innere der Mantelrohre verlegt ist, wird eine besonders kompakte Bauform ermöglicht, die einer verbesserten Verstaubarkeit der Lenksäule zugutekommt.

Erfindungsgemäß kann das Gewinde der Gewindespindel über seine gesamte axiale Länge innerhalb zumindest eines der Mantelrohre angeordnet sein, beispielsweise zumindest innerhalb des ersten, äußeren Mantelrohrs. Dadurch ist die Gewindespindel zusammen mit der Spindelmutter zum einen gegen potentiell schädliche Einwirkungen von außen geschützt und zum anderen schirmt das Mantelrohr die rotierend antreibbare Gewindespindel zum Fahrzeuginnenraum hin ab, so dass keine zusätzlichen Schutzvorrichtungen erforderlich sind.

Bevorzugt kann das Gewinde als Trapezgewinde ausgebildet sein. Durch ein solches Trapezgewinde lässt sich im Vergleich zu anderen Gewindearten ein höherer Wirkungsgrad erreichen, so dass der Stellmotor entsprechend kleiner und kostengünstiger ausgestaltet werden kann.

Das Gewinde kann dabei einen oder mehrere Gewindegänge aufweisen. Je nach wirkender Beanspruchung kann ein Gewinde mit einem einzigen Gewindegang oder bei entsprechend hohen Kräften, ein Gewinde mit mehreren Gewindegängen zum Einsatz kommen.

Das erste Mantelrohr, in dem die Gewindespindel angeordnet ist und an dem sie sich axial in Längsrichtung abstützt, beispielsweise das äußere Mantelrohr, kann bevorzugt einen geschlossenen Mantel aufweisen, so dass das Mantelrohr die Gewindespindel bevorzugt über ihre gesamte Länge, d.h. ihre axiale Erstreckung, zumindest über die Länge des Gewindes, umfangsseitig allseitig geschlossen umgibt. Dadurch können keine Fremdkörper von außen durch das Mantelrohr eindringen, so dass der Spindeltrieb geschützt und damit besonders funktionssicher ist. Das Mantelrohr kann beispielsweise staubdicht ausgestaltet sein, so dass auch langfristig eine Beeinträchtigung der Funktion durch Verunreinigungen verhindert wird. Die sichere Funktion ist ein wesentlicher Aspekt insbesondere bei steer-by-wire-Lenksäulen für autonomes Fahren, weil dabei gewährleistet sein muss, dass jederzeit die Lenksäule aus ihrer verstauten, eingefahrenen Ruheposition schnell in die Bedienposition ausgefahren werden kann und dabei keine Beeinträchtigungen durch Fremdkörper oder Verunreinigungen auftreten.

Die allseitige Abdeckung stellt außerdem sicher, dass keine beweglichen Teile des Spindeltriebs von außen zugänglich sind, so dass die Sicherheit der Fahrzeuginsassen ohne zusätzliche Schutzeinrichtungen gewährleistet ist.

Eine Ausführung der Erfindung sieht vor, auf dem vorderen, dem zweiten Mantelrohr abgewandten Ende des ersten Mantelrohrs ein Deckel angeordnet ist, in dem die Gewindespindel drehbar gelagert ist. Das erste Mantelrohr bildet beispielsweise das äußere Mantelrohr, dessen hinteres Ende offen ist, so dass das zweite, innere Mantelrohr dort nach hinten teleskopierend ein- und ausfahrbar ist. Das vordere Ende, durch das bei konventionellen Lenksäulen die Lenkspindel zum Lenkgetriebe hindurchgeführt ist, ist erfindungsgemäß durch einen Deckel verschlossen, welcher die koaxiale Lagerung der Gewindespindel aufnehmen kann, und zwar sowohl als Radiallager für die drehbare Lagerung als auch als Axiallager zur Abstützung der Gewindespindel bzw. des Spindeltriebs in Richtung der Längsachse. Die Integration des Lagers, welches beispielsweise als Wälzlager ausgebildet sein kann, in das Mantelrohr ist vorteilhaft im Hinblick auf eine kompakte, funktionssichere Bauform. Um das Eindringen von Verunreinigungen oder Fremdkörpern zu verhindern, kann die Gewindespindel abgedichtet durch den Deckel in das Mantelrohr durchgeführt sein. Durch Dichtungsmittel im Lager oder an dem Deckel angebrachte Abdeckmittel, Schutzgehäuse oder dergleichen kann der Innenraum des Mantelrohrs, in dem die Gewindespindel angeordnet ist, effektiv gegen äußere Einflüsse gesichert werden.

Der Stellantrieb kann an dem vorderen, dem zweiten Mantelrohr abgewandten Ende des ersten Mantelrohrs angeordnet sein. Die Gewindespindel ist, bevorzugt koaxial, in dem ersten, beispielsweise dem äußeren Mantelrohr angeordnet, wobei ihre Antriebsseite sich auf der dem zweiten Mantelrohr abgewandten Ende, also gemäß vorangehender Definition dem vorderen Ende des ersten Mantelrohrs befindet. Auf der Antriebsseite ist die Gewindespindel mit dem Stellmotor des Spindelantriebs gekuppelt, bevorzugt unter Zwischenschaltung eines Getriebes. Beispielsweise kann auf einem aus dem Mantelrohr vorstehenden Ende ein Schneckenrad auf der Gewindespindel befestigt sein, mit der eine mit der Motorwelle des Stellmotors gekuppelte Schnecke kämmt. Das auf diese Weise gebildete Schneckenradgetriebe kann stirnseitig an dem Mantelrohr angebracht sein, beispielsweise an den vorderen Deckel angeflanscht sein. Dadurch kann eine kompakte Bauweise realisiert werden. Alternativ können andere Bauformen von Getrieben zwischen dem Stellmotor und der Gewindespindel eingesetzt werden, die bevorzugt wie das genannte Schneckenradgetriebe als Untersetzungsgetriebe ausgebildet sind, beispielsweise Planetengetriebe, Harmonic-Drive-Getriebe (Wellgetriebe) oder dergleichen. Durch eine gekapselte Bauweise des Getriebes kann erreicht werden, dass keine Fremdkörper in den erfindungsgemäß im Mantelrohr angeordneten Spindeltrieb eindringen können.

Eine vorteilhafte Ausführungsform der Erfindung sieht vor, dass in dem zweiten Mantelrohr zumindest ein drittes Mantelrohr drehfest und teleskopierend axial verschiebbar gelagert ist, welches mit dem Stellantrieb verbunden ist und relativ zum zweiten Mantelrohr axial ein- und ausfahrbar ist. Dadurch wird ein Mehrfach-Teleskop gebildet, welches ein größeres Längenverhältnis zwischen maximal ineinander eingefahrenen und maximal auseinander ausgefahrenen Mantelrohren hat, als ein lediglich aus zwei Mantelrohren gebildetes Teleskop. Das dritte Mantelrohr kann beispielsweise in dem zweiten Mantelrohr axial verschiebbar aufgenommen sein, ähnlich wie das zweite Mantelrohr in dem ersten Mantelrohr aufgenommen ist. Entsprechend kann eine Manteleinheit mit drei oder mehr teleskopierenden Mantelrohren bei einer vorgegebenen maximalen Länge auf kleinerem Raum verstaut werden, was für eine Verwendung beim autonomen Fahren vorteilhaft ist.

Für die Realisierung eines motorischen Stellantriebs eines Mehrfach-Teleskops ist es vorteilhaft, dass an dem dritten Mantelrohr ein Gewindebolzen koaxial drehfest angebracht ist, der in eine axiale Gewindebohrung in der Gewindespindel eingeschraubt ist. Der Gewindebolzen erstreckt sich dabei von dem dritten Mantelrohr koaxial durch das zweite Mantelrohr nach vorn und greift in ein korrespondierendes, koaxiales Innengewinde in der Gewindespindel ein. Die Gewinde der Gewindespindel und des Gewindebolzens sind gleichsinnig, beispielsweise als Rechtsgewinde ausgebildet. Der Gewindebolzen ist drehfest mit dem dritten Mantelrohr verbunden, ebenso wie die Mantelrohre miteinander drehfest gekoppelt und dabei axial verschiebbar koaxial ineinander aufgenommen sind. Dadurch bewirkt eine Drehung der Gewindespindel relativ zum ersten Mantelrohr eine axiale Bewegung des Gewindebolzens, so dass je nach Drehrichtung dass dritte Mantelrohr axial in das erste Mantelrohr hineingezogen oder aus diesem herausgefahren wird. Gleichzeitig erfolgt - wie oben beschrieben - durch die mit ihrem äußeren Gewinde in die Spindelmutter eingeschraubte Gewindespindel eine axiale Verschiebung des zweiten Mantelrohrs relativ zum ersten Mantelrohr. Dabei erfolgt die axiale Bewegung des zweiten und dritten Mantelrohrs für eine gegebene Drehrichtung der Gewindespindel gleichgerichtet.

Bei der vorgenannten Ausführung erfolgt der axiale translatorische Antrieb in Richtung der Längsachse für das zweite Mantelrohr und das dritte Mantelrohr von der Gewindespindel aus über unterschiedliche Gewindetriebe, nämlich über den aus dem äußeren Gewinde der Gewindespindel und der Spindelmutter gebildeten ersten Gewindetrieb bzw. den aus dem Innengewinde der Gewindespindel und dem Gewindebolzen gebildeten zweiten Gewindetrieb. Durch die Gestaltung der Gewinde können die Bewegungen des zweiten Mantelrohrs bzw. des dritten Mantelrohrs relativ zum ersten Mantelrohr unabhängig voneinander vorgegeben werden. Die koaxiale Anordnung der Gewindetriebe ermöglicht dabei einen besonders kompakten Aufbau, wobei durch die erfindungsgemäße Anordnung innerhalb der Mantelrohre beide Gewindetriebe gegen äußere Einflüsse geschützt sind.

Bevorzugt weisen in der vorangehend beschriebenen Ausführungsform die Gewinde des Gewindebolzens - entsprechend dem Innengewinde der damit korrespondierenden Gewindebohrung - und der Gewindespindel - entsprechend der Spindelmutter - unterschiedliche Gewindesteigungen auf. Wenn die Gewinde des Gewindebolzens und der Gewindespindel die gleiche Steigung haben, bewegen sich der Gewindebolzen und die Spindelmutter bei Drehung der Gewindespindel mit derselben Geschwindigkeit axial in Längsrichtung relativ zur Gewindespindel. Wenn nun die Gewindesteigung der Gewindespindel von der Gewindesteigung des Gewindebolzens unterschiedlich ist, verhält sich für eine gegebene Drehgeschwindigkeit der Gewindespindel die translatorische Geschwindigkeit des Gewindebolzens relativ zur Geschwindigkeit der Spindelmutter-jeweils relativ zur Gewindespindel - entsprechend dem Verhältnis der Gewindesteigungen. Entsprechend verhält sich der jeweils zurückgelegte Weg entlang der Längsachse für eine gegebene Anzahl von Umdrehungen der Gewindespindel. Wird beispielsweise die Gewindesteigung des Gewindebolzens doppelt so groß gewählt wie die Gewindesteigung des Gewindespindel, wird das mit dem Gewindebolzen verbundene dritte Mantelrohr doppelt so schnell bzw. doppelt so weit relativ zum ersten Mantelrohr bewegt, wie das mit der Spindelmutter verbundene zweite Mantelrohr. Bei diesem Verhältnis der Steigungen wird also das dritte Mantelrohr relativ zum zweiten Mantelrohr mit derselben translatorischen Geschwindigkeit bewegt wie das zweite Mantelrohr relativ zum ersten Mantelrohr. Durch andere Verhältnisse der Gewindesteigungen lassen sich entsprechend unterschiedliche relative Bewegungsgeschwindigkeiten realisieren. Ein besonderer Vorteil einer derartigen Anordnung ist, dass durch die gleichzeitige Relativbewegung der Mantelrohre die Lenksäule besonders dynamisch in Längsrichtung verstellt werden kann, wobei sich die Mantelrohre in jeder Verstellung in definierter Position zueiander befinden. Dies ist insbesondere für Anwendungen beim autonomen Fahren von besonderer Bedeutung, da sichergestellt sein muss, dass die Lenksäule jederzeit schnell und sicher aus ihrer verstauten Parkposition in die Bedienposition ausgefahren werden kann, und auch schnell in die Parkposition gebracht werden kann, beispielsweise für ein bequemes Ein- und Aussteigen.

Es ist weiterhin vorteilhaft, dass die Spindelmutter und/oder der Gewindebolzen relativ zur Manteleinheit beim Überschreiten einer Grenzkraft unter Energieabsorption in axialer Richtung bewegbar ist. Dies kann beispielsweise dadurch realisiert sein, dass die Spindelmutter in dem zweiten Mantelrohr bezüglich der Längsrichtung kraftschlüssig bzw. reibschlüssig aufgenommen ist, und - soweit vorhanden - der Gewindebolzen mit dem dritten Mantelrohr ebenfalls kraft- bzw. reibschlüssig verbunden ist. Dabei wird die axiale Belastbarkeit der Verbindung so eingestellt, die miteinander verbundenen Bauelemente im normalen Betrieb - beim Verstellen der Lenksäule und beim Eingeben von Lenkbefehlen in das Lenkrad - relativ zueinander fixiert sind, jedoch beim Überschreiten einer vorgegebenen Grenzkraft in axialer Richtung, wie sie beim Auftreffen eines Körpers auf das Lenkrad im Crashfall auftritt, nachgibt und ein Einfahren der Mantelrohre ineinander ermöglicht. Dabei wird durch die Reibung zwischen der Spindelmutter bzw. des Gewindebolzens in dem jeweiligen Mantelrohr kinetische Aufprallenergie absorbiert bzw. in Wärme und Verformung umgewandelt. Es ist dabei denkbar und möglich, dass zwischen der Spindelmutter bzw. dem Gewindebolzen und dem Mantelrohr ein Toleranzring angeordnet ist. Mit einem solchen Toleranzring lässt sich die Reibung in axialer Richtung einfach und mit geringen Toleranzschwankungen festlegen.

Alternativ ist es denkbar und möglich, dass zwischen der Spindelmutter bzw. dem Gewindebolzen und dem jeweiligen Mantelrohr anstelle der beschriebenen reibschlüssigen Verbindung zur Energieabsorption Energieabsorptionselemente im Kraftschluss in axialer Richtung zwischen Spindelmutter und Manteleinheit angeordnet sind, z.B. Verformungselemente, z.B. Biege- oder Reißelemente. Derartige Energieabsorptionselemente, die prinzipiell bekannt sind, werden bei einer relativen Bewegung plastisch verbogen, aufgetrennt oder zerspant, wobei die absorbierte kinetische Energie definiert absorbiert wird und dadurch eine kontrollierte Abbremsung des auf das Lenkrad aufprallenden Körpers stattfindet. Dadurch wird das Verletzungsrisiko verringert und das Sicherheitsniveau erhöht.

Es kann vorgesehen sein, dass in der Manteleinheit ein Drehwinkel- und / oder Drehmomentsensor angeordnet ist. Mittels derartiger Sensoren kann in einem steer-by-wire-Lenksystem der jeweils eingestellte Lenkwinkel und gegebenenfalls zusätzlich oder alternativ Lenkmoment das zwischen Lenkrad und Lenkspindel anstehende Drehmoment gemessen werden. Die Messwerte können als Steuerinformationen für die Ansteuerung der mit den gelenkten Rädern verbundenen Stellantriebe genutzt werden.

Zur Anbringung in einem Kraftfahrzeug kann vorgesehen sein, dass die Manteleinheit von einer mit einer Fahrzeugkarosserie verbindbaren Trageinheit gehalten wird. Die Trageinheit dient zur Halterung der Manteleinheit, konkret zur Fixierung des ersten, in der Regel äußeren Mantelrohrs in Längsrichtung der Lenkspindel relativ zur Kraftfahrzeugkarosserie. Außerdem kann die Manteleinheit relativ zur Trageinheit quer zur Längsachse in Höhenrichtung verstellbar angebracht sein, um die Höhe des Lenkrads relativ zur Fahrerposition einstellen zu können. Die Höhenverstellbarkeit kann durch Verschwenken der Manteleinheit um eine horizontale Schwenkachse in der Trageinheit erfolgen, und zwar entweder manuell, oder ebenfalls mittels eines motorischen Stellantriebs ähnlich wie vorangehend für die Längsverstellung beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines steer-by-wire-Lenksystems,
- Figur 2: eine erfindungsgemäße Lenksäule in einer schematischen perspektivischen Ansicht,
- Figur 3: einen Querschnitt durch die Lenksäule gemäß Figur 2,
- Figur 4: einen Längsschnitt entlang der Längsachse durch die Lenksäule gemäß Figur 1,
- Figur 5: eine zweite Ausführungsform einer erfindungsgemäße Lenksäule in einer schematischen perspektivischen Ansicht,
- Figur 6: einen Längsschnitt entlang der Längsachse durch die Lenksäule gemäß Figur 5 in ausgefahrenem Zustand,
- Figur 7: einen Längsschnitt entlang der Längsachse durch die Lenksäule gemäß Figur 5 in eingefahrenem Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

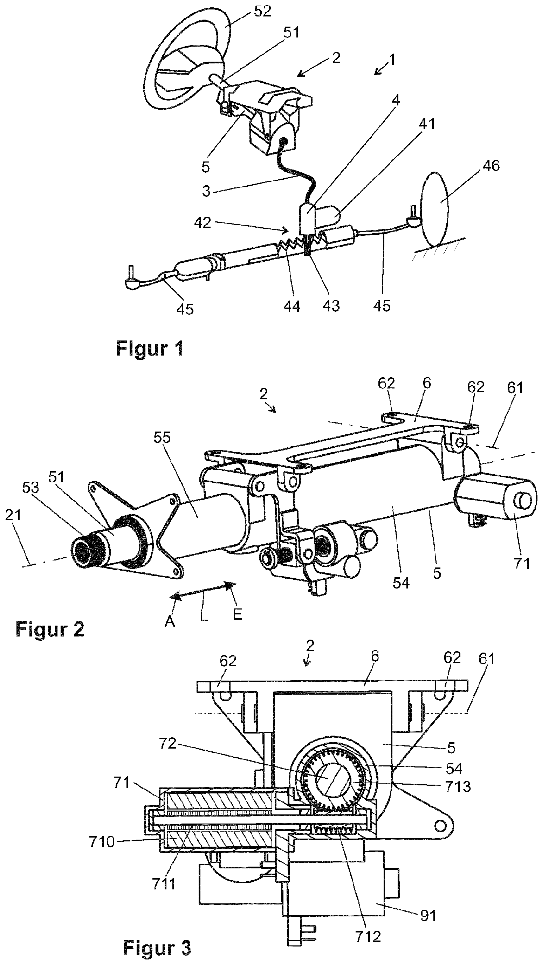

Figur 1 zeigt schematisch ein steer-by-wire-Lenksystem 1, welches als Eingabeeinheit eine Lenksäule 2 umfasst, die über eine elektrische Leitung 3 mit einem elektrischen Lenkungsantrieb 4 verbunden ist. Der Lenkungsantrieb 4 umfasst einen mit der elektrischen Leitung 3 verbundenen elektrischen Stellmotor 41, der ein Lenkungs-Stellmoment in ein Lenkgetriebe 42 einleitet. Dort wird das Lenkungs-Stellmoment über ein Ritzel 43 und eine Zahnstange 44 in eine Translationsbewegung von Spurstangen 45 umgesetzt, wodurch ein Lenkeinschlag der gelenkten Räder 46 bewirkt wird.

Die Lenksäule 2 weist eine Manteleinheit 5 auf, in der eine Lenkspindel 51 drehbar gelagert, an deren bezogen auf die Fahrtrichtung hinteren Ende ein Lenkrad 52 angebracht ist.

Figur 2 zeigt die Lenksäule 2 in einer ersten Ausführungsform. Darin ist die Lenkspindel 51 um die Längsachse 21 drehbar in der Manteleinheit 5 gelagert. Der Endabschnitt 53 der Lenkspindel 51 ist ausgebildet zur Anbringung eines Lenkrads 52, welches in dieser Darstellung weggelassen ist.

Die Manteleinheit 5 umfasst ein erstes Mantelrohr 54, auch als äußeres Mantelrohr oder Kastenschwinge bezeichnet, in dem ein zweites Mantelrohr 55, hier auch als inneres Mantelrohr bezeichnet, koaxial aufgenommen ist. Der Innenquerschnitt des ersten Mantelrohrs 54 und der Außenquerschnitt des zweiten Mantelrohrs 55 sind hinsichtlich Form und Abmessungen so aufeinander abgestimmt, dass das Mantelrohr 55 in Richtung der Längsachse 21 in dem ersten Mantelrohr 54 wie mit dem Doppelpfeil angedeutet in Längsrichtung L in Einfahrrrichtung E vor und in Ausfahrrichtung A zurück axial teleskopierend verschiebbar ist, um eine Längsverstellung des Lenkrads 52 zu ermöglichen. Die Mantelrohre 54 und 55 sind relativ zueinander drehfest bezüglich der Längsachse 21 miteinander gekoppelt.

Das Mantelrohr 54 an einer Trageinheit 6 um eine Schwenkachse 61 schwenkbar gelagert. Die Trageinheit 6 umfasst Befestigungsmittel 62, welche die Anbringung der Lenksäule 2 an einer hier nicht dargestellten Kraftfahrzeug-Karosserie ermöglichen. Dadurch, dass das erste Mantelrohr 54 um die Schwenkachse 61 verschwenkt wird, kann ein im Endbereich 53 angebrachtes Lenkrad 52 relativ zur Karosserie in Höhenrichtung H verstellt werden, was mit dem Doppelpfeil angedeutet ist.

Zur Längsverstellung der Lenksäule 2 ist ein motorischer Stellantrieb 7 vorgesehen.

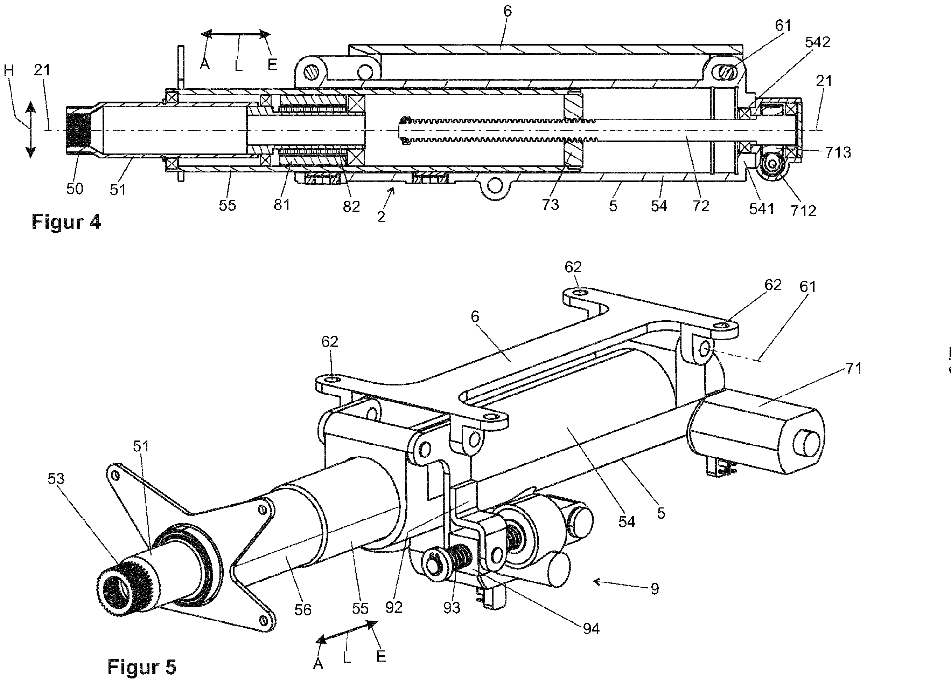

Figur 3 zeigt einen Querschnitt senkrecht zur Längsachse 21 durch den Stellantrieb 7 in einer Ansicht von hinten. Figur 4 zeigt einen Längsschnitt durch die Lenksäule 2 entlang der Längsachse 21, wobei sich der Stellantrieb 7 am hinteren Ende der Lenksäule 2 in der Darstellung rechts befindet.

Der Stellantrieb 7 weist einen elektrischen Stellmotor 71 auf. Der Stellmotor umfasst einen Stator 710 und einen Rotor 711, der mit einer Schnecke 712 gekuppelt ist. Die Schnecke 712 steht in Eingriff mit einem Schneckenrad 713, welches drehfest auf einer Gewindespindel 72 angebracht ist. Der Stellantrieb 7 ist an einem Deckel 541 befestigt, der auf dem vorderen, dem zweiten Mantelrohr 55 abgewandten Ende des ersten Mantelrohrs 54 angebracht ist. In dem Deckel 541 ist die Gewindespindel 72 in einem Lager 542 um die Längsachse 21 drehbar gelagert. Zusammen mit dem Stellantrieb 7 ist die Gewindespindel 72 bezüglich der Längsrichtung L an dem Mantelrohr 54 abgestützt, d.h. fixiert. Die Mantelrohre 54 und 55 sind gegen relative Verdrehung bezüglich der Längsachse gesichert, beispielsweise mittels nicht dargestellter Schiebeführungen, so dass sie sich bei einer Drehung der Gewindespindel 72 nicht gegeneinander verdrehen können.

Wie in Figuren 3 und 4 erkennbar, erstreckt sich die Gewindespindel 72 koaxial innerhalb der Manteleinheit 5, wobei sie über ihre gesamte Länge innerhalb des ersten Mantelrohrs 54 angeordnet ist.

Die Gewindespindel 72 ist in eine Spindelmutter 73 eingeschraubt, die koaxial zur Längsachse 21 am vorderen Ende des zweiten Mantelrohrs 55 befestigt ist. Dadurch wird ein Spindeltrieb gebildet, der in Längsrichtung L, d.h. parallel zur Längsachse 21 zwischen den Mantelrohren 54 und 55 wirkt. Die Spindelmutter 73 umfasst einen Kunststoff oder ist bevorzugt ein einstückiges integrales Kunststoffspritzgussbauteil. In einer nicht dargestellten Ausführungsform kann die Spindelmutter 73 mehrteilig ausgebildet sein, beispielsweise durch zwei axial voneinander beabstandete Innengewindeabschnitte, welche axial federnd gegeneinander verspannt sind. Dadurch lässt sich das axiale Spiel beim Zusammenwirken von Spindelmutter und Gewindespindel reduzieren, da die Innengewindeabschnitte sich jeweils an einer der sich entgegengerichteten Gewindeflanken gegeneinander abstützen. Mit anderen Worten liegt der erste Innengewindeabschnitt an der ersten Gewindeflanke an und der zweite Innengewindeabschnitt an der zweiten Gewindeflanke an, wobei die zweite Gewindeflanke der ersten Gewindeflanke entgegengerichtet ist, so dass die erste und die zweite Gewindeflanke den Gewindegang bilden.

Durch Antrieb des Stellmotors 71 wird die Gewindespindel 72 über das aus der Schnecke 712 und das Schneckenrad 713 gebildete Schneckengetriebe in Drehung versetzt, wodurch die Spindelmutter 73 je nach Drehrichtung in oder entgegen der Längsrichtung L translatorisch verfahren wird, und entsprechend das damit verbundene zweite Mantelrohr 55 relativ zum ersten Mantelrohr 54 in Einfahrrichtung E oder in Ausfahrrichtung A ein- oder ausgefahren wird. Diese Längsverstellung dient zur Anpassung der Position des Lenkrads 52 relativ zur Fahrerposition, oder auch zur Verstauung des Lenkrads 52, indem das zweite Mantelrohr 55 so weit wie möglich in das erste Mantelrohr 54 eingefahren wird.

Durch die erfindungsgemäße Anordnung der Gewindespindel 72, bevorzugt koaxiale Anordnung, innerhalb der teleskopierbaren Mantelrohre 54 und 55 ergibt sich ein besonders kompakter Aufbau der Lenksäule 1. Dadurch, dass das Mantelrohr 54, welches die Gewindespindel 72 über ihre gesamte Länge umgibt, als umfangsseitig geschlossenes Rohr ausgebildet ist, ist die Gewindespindel 72 zum einen gegen Einflüsse von außen geschützt. Der Schutz wird dadurch vervollständigt, dass das Mantelrohr 54 endseitig durch den Deckel 541 geschlossen ist, durch den die Gewindespindel 72 bevorzugt abgedichtet hindurchgeführt ist. Auf diese Weise kann der Gewindetrieb staubdicht geschlossen sein, so dass auch langfristig eine leichtgängige Funktion gewährleistet ist. Zum anderen ist der Fahrzeuginnenraum gegen die rotierende Gewindespindel 72 abgeschirmt.

In dem zweiten Mantelrohr 55 ist die Lenkspindel 51 um die Längsachse 21 drehbar gelagert. Dabei ist innerhalb des Mantelrohrs 55 ein Aktuator 8 angeordnet, der beispielsweise als elektrischer Servomotor ausgebildet sein kann, mit einem Stator 81, der drehfest mit der Lenkspindel 51 verbunden ist, und einem koaxial darin angeordneten Rotor 82, der drehfest auf der Lenkspindel 51 befestigt ist. Durch eine entsprechende elektrische Ansteuerung kann von dem Aktuator 8 aktiv ein Drehmoment in die Lenkspindel 51 eingekoppelt werden, so dass abhängig von gemessenen oder vorgegebenen Parametern am Lenkrad der Eindruck einer mechanischen Rückmeldung des Lenksystems erzeugt wird.

In den Aktuator 8 integriert, oder alternativ als separate Bauelemente, können Drehwinkel- und/oder Drehmomentsensoren zwischen der Lenkspindel 51 und dem Mantelrohr 55 angebracht sein, die ebenfalls innerhalb des Mantelrohrs 55 untergebracht sein können.

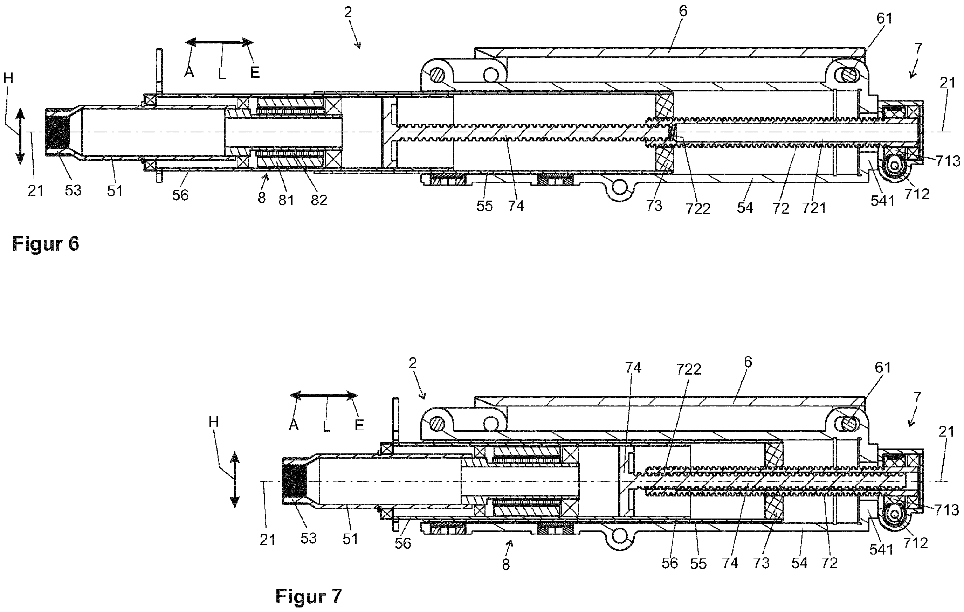

Eine zweite Ausführungsform einer erfindungsgemäßen Lenksäule 2 ist in den Figuren 5, 6 und 7 dargestellt, wobei für identische bzw. gleichwirkende Teile dieselben Bezugszeichen verwendet werden. Figur 5 zeigt eine perspektivische Ansicht wie Figur 2, und Figur 6 und 7 einen Längsschnitt wie in Figur 4, wobei Figur 6 die Lenksäule 2 in eingefahrenem und Figur 7 in ausgefahrenem Zustand zeigt.

In dem zweiten Mantelrohr 55 ist ein drittes Mantelrohr 56 in Längsrichtung L teleskopierbar angeordnet, und zwar im Prinzip so wie vorangehend für das erste Mantelrohr 54 zweite Mantelrohr 55 beschrieben. Die Mantelrohre 54, 55 und 56 sind gegen relative Verdrehung bezüglich der Längsachse gesichert, beispielsweise mittels nicht dargestellter Schiebeführungen, so dass sie sich bei einer Drehung der Gewindespindel 72 nicht gegeneinander verdrehen können.

An dem dritten Mantelrohr 56 ist ein Gewindebolzen 74 drehfest angebracht, der koaxial zur Längsachse 21 angeordnet ist und sich nach vorn in Richtung zum Stellantrieb 7 erstreckt.

In dieser Ausführung ist die Gewindespindel 72 rohrförmig ausgebildet mit einer axialen Bohrung 721, die im hinteren, dem dritten Mantelrohr 56 zugewandten Endbereich als Gewindebohrung 722 ausgestaltet ist mit einem ebenfalls koaxialen Innengewinde. In die Gewindebohrung 722 ist der Gewindebolzen 74 eingeschraubt.

Der Gewindebolzen 74 bildet zusammen mit der Gewindebohrung 722 der Gewindespindel 72 einen zweiten Spindeltrieb. Wird die Gewindespindel 72 wie oben für die erste Ausführungsform beschrieben von dem Stellantrieb 7 in Drehung versetzt, die entsprechend der Gewindebolzen 74 nach Drehrichtung in oder entgegen der Längsrichtung L translatorisch verfahren, und entsprechend das damit verbundene dritte Mantelrohr 56 relativ zum ersten Mantelrohr 54 in Einfahrrichtung E oder in Ausfahrrichtung A ein- oder ausgefahren wird.

Das Gewinde des Gewindebolzens 74 und der Gewindebohrung 722 hat bevorzugt eine größere Gewindesteigung als das Gewinde der Gewindespindel 72 und der Spindelmutter 73. Dem Verhältnis der Gewindesteigungen entsprechend verhält sich der jeweils zurückgelegte Weg beim Ein- oder Ausfahren entlang der Längsachse 21 für eine gegebene Anzahl von Umdrehungen der Gewindespindel 72. Wird beispielsweise die Gewindesteigung des Gewindebolzens 74 doppelt so groß gewählt wie die Gewindesteigung des Gewindespindel 72, wird das mit dem Gewindebolzen 74 verbundene dritte Mantelrohr 56 doppelt so schnell bzw. doppelt so weit relativ zum ersten Mantelrohr 54 bewegt, wie das mit der Spindelmutter 73 verbundene zweite Mantelrohr 55. Bei diesem Verhältnis der Steigungen wird also das dritte Mantelrohr 56 relativ zum zweiten Mantelrohr 55 mit derselben translatorischen Geschwindigkeit bewegt wie das zweite Mantelrohr 55 relativ zum ersten Mantelrohr 54.

Durch andere Verhältnisse der Gewindesteigungen lassen sich entsprechend unterschiedliche relative Bewegungsgeschwindigkeiten realisieren.

In der zuletzt beschriebenen zweiten Ausführungsform ist die Lenkspindel 51 in dem dritten Mantelrohr 56 gelagert, es können dort ein Aktuator 8 und gegebenenfalls Lenkwinkel- und/oder Drehmomentsensoren untergebracht sein, wie oben beschrieben in der ersten Ausführungsform in dem zweiten Mantelrohr 55.

In beiden Ausführungsformen ist die Verbindung zwischen Spindelmutter 73 und zweitem Mantelrohr 55 bzw. Gewindebolzen 74 und drittem Mantelrohr 56 derart ausgestaltet, dass bei den im normalen Betrieb zu erwartenden axialen Beanspruchungen, d.h. den Kräften, die in Längsrichtung auf die Mantelrohre 54, 55 und 56 einwirken, die Spindelmutter 73 bzw. der Gewindebolzen 74 relativ zum Mantelrohr 55 bzw. 56 fixiert sind. Wird jedoch eine Kraft in die Lenkspindel 51 eingeleitet, die eine Grenzkraft überschreitet, wenn im Crashfall ein Körper auf das Lenkrad 52 auftrifft, ist es vorteilhaft, dass eine relative Bewegung zwischen Spindelmutter 73 und zweitem Mantelrohr 55 bzw. Gewindebolzen 74 und drittem Mantelrohr 56 möglich ist zur Absorption kinetischer Energie. Eine derartige Energieabsorptionseinrichtung kann beispielsweise dadurch realisiert werden, dass die Spindelmutter 73 in dem zweiten Mantelrohr 55 bezüglich der Längsrichtung L kraftschlüssig bzw. reibschlüssig aufgenommen ist, und - soweit vorhanden - der Gewindebolzen 74 mit dem dritten Mantelrohr 56 ebenfalls kraft- bzw. reibschlüssig verbunden ist. Dabei wird die axiale Belastbarkeit der Verbindung so eingestellt, dass beim Überschreiten einer vorgegebenen Grenzkraft in axialer Richtung, wie sie beim Auftreffen eines Körpers auf das Lenkrad im Crashfall auftritt, nachgibt und ein Einfahren der Mantelrohre 55 und 54 bzw. 56 und 55 ineinander ermöglicht. Dabei wird durch die Reibung zwischen der Spindelmutter 73 bzw. des Gewindebolzens 74 in dem jeweiligen Mantelrohr 55 bzw. 56 kinetische Aufprallenergie absorbiert bzw. in Wärme und Verformung umgewandelt. Alternativ oder zusätzlich können energieumwandelnde Vorrichtungen vorgesehen sein, welche kinetische Energie im Crashfall in Verformung umwandeln, beispielsweise durch Biegen, Trennen oder Zerspanen von speziell dafür angepassten Energieabsorptionselem enten.

Über einen im Prinzip gleichartig aufgebauten Spindelantrieb 9 mit einem Stellmotor 91 wird eine im Detail nicht dargestellte Höhenverstellung in Höhenrichtung H ermöglicht. Dabei ist ein zwischen der ersten Manteleinheit 54 und der Trageinheit 6 jeweils über Gelenke angebrachter Hebel 92 mittels einer durch den Stellmotor 91 drehend antreibbaren Spindel 93 und einer darauf angebrachten Spindelmutter 94 verschwenkbar angeordnet, so dass die erste Manteleinheit 54 um die Schwenkachse 61 zur Höhenverstellung eines Lenkrads 52 auf und ab verstellbar ist.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

**Bezugszeichenliste**

| | | | |
|---|---|---|---|
| 1 | Lenksystem | 7 | Stell antrieb |
| 2 | Lenksäule | 71 | Stell motor |
| 21 | Längsachse | 711 | Rotor |
| 3 | Leitung | 712 | Schnecke |
| 4 | Lenkungsantrieb | 713 | Schneckenrad |
| 41 | Stell motor | 72 | Gewindespindel |
| 42 | Lenkgetriebe | 721 | Bohrung |
| 43 | Ritzel | 722 | Gewindebohrung |
| 44 | Zahnstange | 73 | Spindelmutter |
| 45 | Spurstange | 74 | Gewindebolzen |
| 46 | Rad | 8 | Aktuator |
| 5 | Manteleinheit | 81 | Stator |
| 51 | Lenkspindel | 82 | Rotor |
| 52 | Lenkrad | 9 | Spindeltrieb |
| 53 | Endbereich | 91 | Stell motor |
| 54 | erstes Mantelrohr | 92 | Hebel |
| 541 | Deckel | 93 | Spindel |
| 542 | Lager | 94 | Spindelmutter |
| 55 | zweites Mantelrohr | L | Längsrichtung |
| 56 | drittes Mantelrohr | E | Einfahrrichtung |
| 6 | Trageinheit | A | Ausfahrrichtung |
| 61 | Schwenkachse | H | Höhenrichtung |
| 62 | Befestigungsmittel | | |

## Patentansprüche

1. Verstellbare Lenksäule (2) für eine steer-by-wire-Lenkeinrichtung (1) eines Kraftfahrzeugs, umfassend eine Stelleinheit, die eine in einer Manteleinheit (5) um eine Längsachse (21) drehbar gelagerte Lenkspindel (51) umfasst, wobei die Manteleinheit (5) ein erstes Mantelrohr (54) aufweist, in dem zumindest ein zweites Mantelrohr (55) bezüglich der Längsachse (21) drehfest angeordnet und teleskopierend axial verschiebbar gelagert ist, wobei mit dem ersten Mantelrohr (54) und dem zweiten Mantelrohr (55) ein Stellantrieb (7) verbunden ist, von dem das zweite Mantelrohr (55) relativ zum ersten Mantelrohr (54) axial ein- und ausfahrbar ist, und der einen Spindeltrieb umfasst mit einer parallel zur Längsachse (21) angeordneten, von einem elektrischen Stellmotor (71) drehend antreibbaren Gewindespindel (72) die sich an einem Mantelrohr (54) abstützt und die in eine Spindelmutter (73) eingeschraubt ist, die drehfest an dem anderen Mantelrohr (55) angebracht ist,
wobei die Gewindespindel (72) sich innerhalb des ersten Mantelrohrs (54) erstreckt und die Spindelmutter (53) an dem zweiten Mantelrohr (55) angebracht ist, **dadurch gekennzeichnet,**
**dass** in der Manteleinheit (5) ein Aktuator (8) angeordnet ist, der mit der Lenkspindel (51) zusammenwirkt und von dem ein Drehmoment auf die Lenkspindel (51) ausübbar ist.

2. Lenksäule nach Anspruch 1, **dadurch gekennzeichnet,**
**dass** auf dem vorderen, dem zweiten Mantelrohr (55) abgewandten Ende des ersten Mantelrohrs (54) ein Deckel (541) angeordnet ist, in dem die Gewindespindel (72) drehbar gelagert ist.

3. Lenksäule nach einem der vorangehenden Ansprüche, **dadurch gekennzeichnet, dass** der Stellantrieb (7) an dem vorderen, dem zweiten Mantelrohr (55) abgewandten Ende des ersten Mantelrohrs (54) angeordnet ist.

4. Lenksäule nach einem der vorangehenden Ansprüche, **dadurch gekennzeichnet, dass** in dem zweiten Mantelrohr (55) ein drittes Mantelrohr (56) drehfest und teleskopierend axial verschiebbar gelagert ist, welches mit dem Stellantrieb (7) verbunden ist und relativ zum zweiten Mantelrohr (55) axial ein- und ausfahrbar ist.

5. Lenksäule nach Anspruch 4, **dadurch gekennzeichnet, dass** an dem dritten Mantelrohr (56) ein Gewindebolzen (74) drehfest angebracht ist, der in eine axiale Gewindebohrung (722) in der Gewindespindel (72) eingeschraubt ist.

6. Lenksäule nach Anspruch 5, **dadurch gekennzeichnet, dass** die Gewinde des Gewindebolzens (74) und der Gewindespindel (72) unterschiedliche Gewindesteigungen aufweisen.

7. Lenksäule nach einem der vorangehenden Ansprüche, **dadurch gekennzeichnet, dass** die Spindelmutter (73) und/oder der Gewindebolzen (74) relativ zum zweiten und/oder dritten Mantelrohr (55, 56) beim Überschreiten einer Grenzkraft unter Energieumwandlung in axialer Richtung bewegbar ist.

8. Lenksäule nach einem der vorangehenden Ansprüche, **dadurch gekennzeichnet, dass** in der Manteleinheit (5) ein Drehwinkel- und / oder Drehmomentsensor angeordnet ist.

9. Lenksäule nach einem der vorangehenden Ansprüche, **dadurch gekennzeichnet, dass** zwischen dem Stellmotor (71) und der Gewindespindel (72) ein Schneckenradgetriebe (712, 713) angeordnet ist.

10. Lenksäule nach einem der vorangehenden Ansprüche, **dadurch gekennzeichnet, dass** die Manteleinheit (5) von einer mit einer Fahrzeugkarosserie verbindbaren Trageinheit (6) gehalten wird.

## Claims

1. An adjustable steering column (2) for a steer-by-wire steering device (1) of a motor vehicle, comprising an actuating unit which comprises a steering spindle (51) which is mounted so as to be rotatable about a longitudinal axis (21) in a casing unit (5), wherein the casing unit (5) has a first casing tube (54) in which at least one **second** casing tube (55) is arranged in a rotationally fixed fashion with respect to the longitudinal axis (21) and is mounted so as to be movable axially in a telescopic fashion, wherein an actuating drive (7) is connected to the first casing tube (54) and the second casing tube (55), by which actuating drive (7) the second casing tube (55) can be moved in and out axially relative to the first casing tube (54), and which actuating drive (7) comprises a spindle drive with a threaded spindle (72) which is arranged parallel to the longitudinal axis (21), can be driven in rotation by an electric servomotor (71), is supported on a casing tube (54) and is screwed into a spindle nut (73) which is attached in a rotationally fixed manner to the other casing tube (55),
wherein the threaded spindle (72) extends within the first casing tube (54), and the spindle nut (53) is attached to the second casing tube (55), **characterized in that** an actuator (8), which interacts with the steering spindle (51) and by which a torque can be applied to the steering spindle (51), is arranged in the casing unit (5) .

2. The steering column as claimed in claim 1, **characterized in that** a cover (541), in which the threaded spindle (72) is rotatably mounted, is arranged on the front end of the first casing tube (54) facing away from the second casing tube (55).

3. The steering column as claimed in one of the preceding claims, **characterized in that** the actuating drive (7) is arranged at the front end of the first casing tube (54) facing away from the second casing tube (55).

4. The steering column as claimed in one of the preceding claims, **characterized in that** a third casing tube (56) is mounted so as to be rotationally fixed and movable axially in a telescopic fashion in the second casing tube (55), which third casing tube (56) is connected to the actuating drive (7) and can move in and out axially relative to the second casing tube (55).

5. The steering column as claimed in claim 4, **characterized in that** a threaded bolt (74) is attached in a rotationally fixed fashion to the third casing tube (56) and is screwed into an axial threaded borehole (722) in the threaded spindle (72).

6. The steering column as claimed in claim 5, **characterized in that** the threads of the threaded bolt (74) and of the threaded spindle (72) have different thread pitches.

7. The steering column as claimed in one of the preceding claims, **characterized in that**, when a limiting force is exceeded, the spindle nut (73) and/or the threaded bolt (74) can be moved in the axial direction relative to the second and/or third casing tube (55, 56), accompanied by conversion of energy.

8. The steering column as claimed in one of the preceding claims, **characterized in that** a rotational angle sensor and/or torque sensor are/is arranged in the casing unit (5) .

9. The steering column as claimed in one of the preceding claims, **characterized in that** a worm gear system (712, 713) is arranged between the servomotor (71) and the threaded spindle (72).

10. The steering column as claimed in one of the preceding claims, **characterized in that** the casing unit (5) is secured by a supporting unit (6) which can be connected to the bodywork of a vehicle.

## Revendications

1. Colonne de direction réglable (2) pour un dispositif de direction à commande électrique (1) d'un véhicule automobile, comprenant une unité de commande, qui comprend un arbre de direction (51) supporté à rotation autour d'un axe longitudinal (21) dans une unité d'enveloppe (5), l'unité d'enveloppe (5) présentant un premier tube d'enveloppe (54) dans lequel au moins un deuxième tube d'enveloppe (55) est disposé de manière solidaire en rotation par rapport à l'axe longitudinal (21) et est supporté de manière déplaçable axialement de manière télescopique, un entraînement de commande (7) étant connecté au premier tube d'enveloppe (54) et au deuxième tube d'enveloppe (55), par lequel le deuxième tube d'enveloppe (55) peut être entré et sorti axialement par rapport au premier tube d'enveloppe (54), et lequel comprend un mécanisme à broche avec une broche filetée (72) disposée parallèlement à l'axe longitudinal (21), pouvant être entraînée en rotation par un moteur de réglage électrique (71), laquelle est supportée sur un tube d'enveloppe (54) et est vissée dans un écrou de broche (73) qui est monté de manière solidaire en rotation sur l'autre tube d'enveloppe (55),
la broche filetée (72) s'étendant à l'intérieur du premier tube d'enveloppe (54) et l'écrou de broche (53) étant monté sur le deuxième tube d'enveloppe (55),
**caractérisée en ce**
**qu'**un actionneur (8) est disposé dans l'unité d'enveloppe (5), lequel coopère avec la broche de direction (51) et exerce un couple sur la broche de direction (51).

2. Colonne de direction selon la revendication 1, **caractérisée en ce**
**qu'**à l'extrémité avant, opposée au deuxième tube d'enveloppe (55), du premier tube d'enveloppe (54) est disposé un couvercle (541) dans lequel la broche filetée (72) est supportée de manière rotative.

3. Colonne de direction selon l'une quelconque des revendications précédentes, **caractérisée en ce que** l'entraînement de commande (7) est disposé à l'extrémité avant, opposée au deuxième tube d'enveloppe (55), du premier tube d'enveloppe (54).

4. Colonne de direction selon l'une quelconque des revendications précédentes, **caractérisée en ce que** dans le deuxième tube d'enveloppe (55) est supporté de manière déplaçable axialement, de manière solidaire en rotation et de manière télescopique, un troisième tube d'enveloppe (56) qui est connecté à l'entraînement de commande (7) et qui peut être rentré et sorti axialement par rapport au deuxième tube d'enveloppe (55).

5. Colonne de direction selon la revendication 4, **caractérisée en ce qu'**un boulon fileté (74) est monté de manière solidaire en rotation sur le troisième tube d'enveloppe (56), lequel est vissé dans un alésage fileté axial (722) dans la broche filetée (72).

6. Colonne de direction selon la revendication 5, **caractérisée en ce que** le filetage du boulon fileté (74) et le filetage de la broche filetée (72) présentent des pas de filetage différents.

7. Colonne de direction selon l'une quelconque des revendications précédentes, **caractérisée en ce que** l'écrou de broche (73) et/ou le boulon fileté (74) peuvent être déplacés dans la direction axiale par rapport au deuxième et/ou au troisième tube d'enveloppe (55, 56) avec transformation d'énergie lors du dépassement d'une force limite.

8. Colonne de direction selon l'une quelconque des revendications précédentes, **caractérisée en ce qu'**un capteur d'angle de rotation et/ou de couple est disposé dans l'unité d'enveloppe (5).

9. Colonne de direction selon l'une quelconque des revendications précédentes, **caractérisée en ce qu'**entre le moteur de commande (71) et la broche filetée (72) est disposé un entraînement à vis sans fin (712, 713).

10. Colonne de direction selon l'une quelconque des revendications précédentes, **caractérisée en ce que** l'unité d'enveloppe (5) est retenue par une unité de support (6) pouvant être connectée à une carrosserie du véhicule.
